# EUROPEAN PATENT APPLICATION

(11) **EP 3 751 535 A1**
(43) Date of publication of application: **16.12.2020**
(21) Application number: 18909119.2
(22) Date of filing: 16.11.2018
(51) Int. Cl.: G08G 1/00, B60W 30/14, G08G 1/09

(54) **LENGTH MEASUREMENT SYSTEM, VEHICLE COUPLING SYSTEM, LENGTH MEASUREMENT METHOD, AND PROGRAM**

(30) Priority: 09.03.2018 JP 2018043415
(71) Applicant: JVCKenwood Corporation, Yokohama-shi, Kanagawa 2210022 (JP)
(72) Inventor: KURIHARA, Makoto, Yokohama-shi, Kanagawa 221-0022 (JP)
(74) Representative: Schmidbauer, Andreas Konrad
(86) International application number: PCT/JP2018/042563
(87) International publication number: WO 2019/171663

(57) **Abstract**

A distance measuring system (100) in an electronically coupled vehicle group in which multiple vehicles are electronically coupled, each of the multiple vehicles includes a vehicle detection unit (110) configured to detect, in an adjacent lane adjacent to a lane where the electronically coupled vehicle group is travelling, a first position of a preceding vehicle traveling in front of the electronically coupled vehicle group and a first position of a following vehicle traveling behind the electronically coupled vehicle group, an inter-vehicle communication unit (130) configured to receive a second position of the preceding vehicle and a second position of the following vehicle detected by another vehicle among the multiple vehicles of the electronically coupled vehicle group, and a controller (150) configured to calculate a distance between the preceding vehicle and the following vehicle based on the detected first position of the preceding vehicle, the detected first position of the following vehicle, the received second position of the preceding vehicle, and the received second position of the following vehicle.

## Description

### Field

The present invention relates to a distance measuring system, a vehicle coupling system, a distance measuring method, and a computer program.

### Background

A technology that allows multiple unmanned vehicles to travel while following a leader vehicle driven by a driver has been known.

For example, Patent Literature 1 discloses an automatic following traveling system that can reduce time from when vehicles are electronically coupled to when the vehicles start a platoon traveling.

### Citation List

### Patent Literature

Patent Literature 1: Japanese Laid-open Patent Publication No. 2000-311299 A

### Summary

### Technical Problem

It is assumed that the automatic following traveling system disclosed in Patent Literature 1 is applied to cargo transport vehicles such as trucks. In Patent Literature 1, it is possible to allow the automatic following traveling system to change lanes easily, by improving measuring accuracy of a distance between a preceding vehicle that is traveling in front and a following vehicle that is traveling behind in an adjacent lane. Consequently, it is possible to allow the automatic following traveling system to travel more appropriately.

An object of the present invention is to provide a distance measuring system, a vehicle coupling system, a distance measuring method, and a computer program capable of electronically coupling multiple vehicles and allowing the multiple vehicles to change lanes appropriately.

### Solution to Problem

According to one aspect, there is provided a distance measuring system in an electronically coupled vehicle group in which multiple vehicles are electronically coupled, each of the multiple vehicles comprising: a vehicle detection unit configured to detect, in an adjacent lane adjacent to a lane where the electronically coupled vehicle group is travelling, a first position of a preceding vehicle traveling in front of the electronically coupled vehicle group and a first position of a following vehicle traveling behinf the electronically coupled vehicle group; an inter-vehicle communication unit configured to receive a second position of the preceding vehicle and a second position of the following vehicle detected by another vehicle among the multiple vehicles of the electronically coupled vehicle group; and a controller configured to calculate a distance between the preceding vehicle and the following vehicle based on the detected first position of the preceding vehicle, the detected first position of the following vehicle, the received second position of the preceding vehicle, and the received second position of the following vehicle.

According to one aspect, there is provided a vehicle coupling system comprising the multiple vehicles that include the distance measuring system described above.

According to one aspect, there is provided a distance measuring method in an electronically coupled vehicle group in which multiple vehicles are electronically coupled, comprising in each of the multiple vehicles: a step of detecting, in an adjacent lane adjacent to a lane where the electronically coupled vehicle group is travelling, a first position of a preceding vehicle traveling in front of the electronically coupled vehicle group and a first position of a following vehicle traveling behind the electronically coupled vehicle group; a step of receiving, by an inter-vehicle communication, a second position of the preceding vehicle and a second position of the following vehicle detected by another vehicle among the multiple vehicles of the electronically coupled vehicle group; and a step of calculating a distance between the preceding vehicle and the following vehicle based on the detected first position of the preceding vehicle, the detected first position of the following vehicle, the received second position of the preceding vehicle, and the received second position of the following vehicle.

According to one aspect, there is provided a computer program that causes a computer operating as a distance measuring system in an electronically coupled vehicle group in which multiple vehicles are electronically coupled, to execute a distance measuring method comprising in each of the multiple vehicles: a step of detecting, in an adjacent lane adjacent to a lane where the electronically coupled vehicle group is travelling, a first position of a preceding vehicle traveling in front of the electronically coupled vehicle group and a first position of a following vehicle traveling behind the electronically coupled vehicle group; a step of receiving, by an inter-vehicle communication, a second position of the preceding vehicle and a second position of the following vehicle detected by another vehicle among the multiple vehicles of the electronically coupled vehicle group; and a step of calculating a distance between the preceding vehicle and the following vehicle based on the detected first position of the preceding vehicle, the detected first position of the following vehicle, the received second position of the preceding vehicle, and the received second position of the following vehicle.

### Advantageous Effects of Invention

According to the present invention, it is possible to electronically couple multiple vehicles and allow the multiple vehicles to change lanes appropriately.

### Brief Description of Drawings

FIG. 1 is a block diagram illustrating a configuration of a distance measuring system according to a first embodiment of the present invention.
FIG. 2 is a diagram for explaining an example of an operation performed by a vehicle coupling system according to the first embodiment of the present invention.
FIG. 3 is a diagram illustrating an example of a configuration of the distance measuring system according to the first embodiment of the present invention.
FIG. 4 is a diagram illustrating an example of vehicle information stored in the distance measuring system according to the first embodiment of the present invention.
FIG. 5 is a flowchart illustrating an example of an operational flow for configuring the vehicle coupling system according to the first embodiment of the present invention.
FIG. 6 is a flowchart illustrating an example of an operational flow performed when the vehicle coupling system according to the first embodiment of the present invention intends to change lanes.
FIG. 7 is a flowchart illustrating an example of an operational flow performed when a vehicle coupling system according to a second embodiment of the present invention intends to change lanes.
FIG. 8 is a flowchart illustrating an example of an operational flow performed when a vehicle coupling system according to a third embodiment of the present invention intends to change lanes.
FIG. 9 is a diagram for explaining an example of an operation performed by a vehicle coupling system according to a fourth embodiment of the present invention.
FIG. 10 is a flowchart illustrating an example of an operational flow performed when the vehicle coupling system according to the fourth embodiment of the present invention intends to change lanes.

### Description of Embodiments

Hereinafter, embodiments of the present invention will be described in detail with reference to the accompanying drawings. In the drawings, the same reference numerals denote the same or corresponding portions, and the description thereof will be omitted.

### First Embodiment

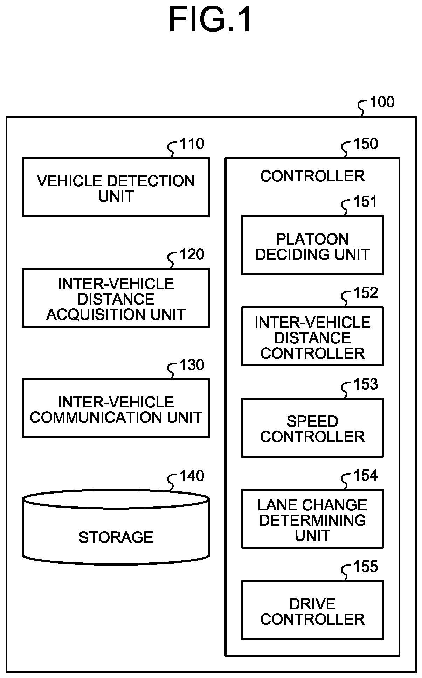

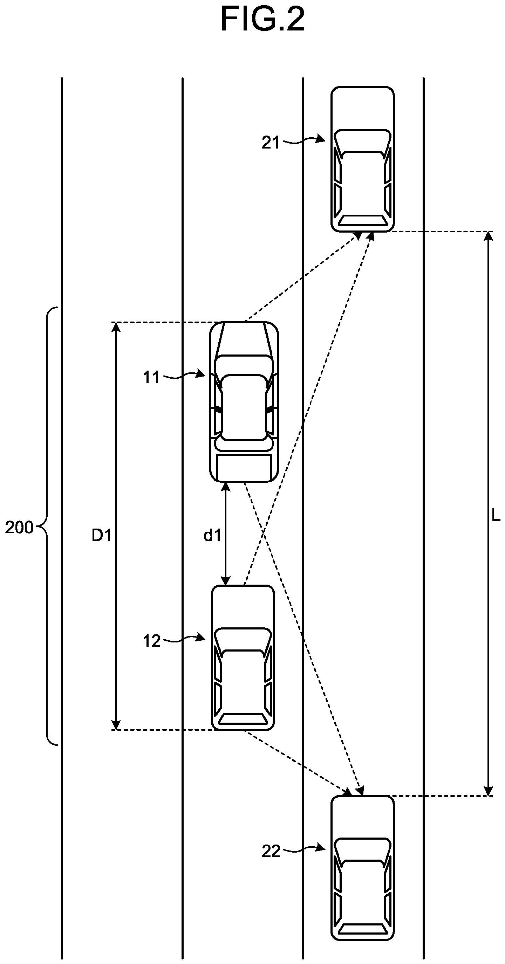

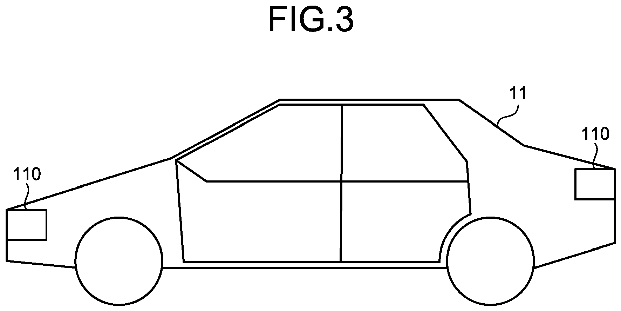

A distance measuring system according to a first embodiment of the present invention will be described with reference to FIG. 1, FIG. 2, and FIG. 3. FIG. 1 is a block diagram illustrating a configuration of a distance measuring system according to the first embodiment of the present invention. FIG. 2 is a diagram for explaining an example of an operation performed by a vehicle coupling system. FIG. 3 is a diagram illustrating an example of a configuration of the distance measuring system according to the first embodiment of the present invention.

As illustrated in FIG. 1, a distance measuring system 100 includes a vehicle detection unit 110, an inter-vehicle distance acquisition unit 120, an inter-vehicle communication unit 130, a storage 140, and a controller 150. In the present embodiment, for example, the distance measuring system 100 is mounted on a private car. Multiple private cars mounted with the distance measuring system 100 are electronically coupled to be in a platoon traveling, while detecting vehicles in an adjacent lane appropriately.

The vehicle detection unit 110 detects vehicles traveling in front and behind in the adjacent lane. For example, the vehicle detection unit 110 may continuously detect vehicles in the adjacent lane, or may detect vehicles in the adjacent lane only when the vehicles in the adjacent lane are desired to be detected. For example, the vehicle detection unit 110 is a camera for capturing an image. In this case, the vehicle detection unit 110 captures an image of vehicles traveling in front and behind in the adjacent lane. More specifically, the vehicle detection unit 110 detects the position of vehicles by capturing an image of number plates or the like attached to the vehicles that are travelling in front and behind in the adjacent lane.

FIG. 2 illustrates a case in which two vehicles of a leader vehicle 11 and a follower vehicle 12 are electronically coupled. Here, the electronically coupled vehicles are electronically coupled so as to form a line along a traveling direction of the vehicles. For example, in a normal traveling state excluding when the vehicles are to change lanes, to turn left or right, or the like, the vehicles travel in line in the same lane while keeping a predetermined inter-vehicle distance. When the vehicles are electronically coupled, the inter-vehicle distance is controlled more accurately by sharing acceleration information of the leader vehicle 11 by using a radar and the inter-vehicle communication unit 130 mounted on a front of the follower vehicle 12. More specifically, the follower vehicle 12 automatically travels so as to follow the leader vehicle 11, while keeping an inter-vehicle distance d1 from the leader vehicle 11 constant. Consequently, a vehicle coupling system 200 is formed by the leader vehicle 11 and the follower vehicle 12. In this case, the vehicle detection unit 110 of the leader vehicle 11 detects a position (a first position) of a preceding vehicle 21 that is traveling in front of the leader vehicle 11, and a position (a first position) of a following vehicle 22 that is traveling behind the follower vehicle 12, in the adjacent lane. Similarly, the vehicle detection unit 110 of the follower vehicle 12 detects a position (a second position) of the preceding vehicle 21 and a position (a second position) of the follower vehicle 12 in the adjacent lane. In other words, the leader vehicle 11 and the follower vehicle 12 measure a distance L between the preceding vehicle 21 and the following vehicle 22. The leader vehicle 11 may be driven by a person, or may be driven automatically.

As illustrated in FIG. 3, the vehicle detection unit 110 is provided on a front and a rear of an exterior of the leader vehicle 11. For example, the vehicle detection unit 110 may be provided near the number plate of the leader vehicle 11. The vehicle detection unit 110 may also be provided in an interior of the leader vehicle 11. The vehicle detection unit 110 may also be provided in multiple numbers. For example, the vehicle detection unit 110 may be provided on a front center, a right front, a left front, a rear center, a right rear, a left rear, a right side, and a left side of the leader vehicle 11. Because the positions where the vehicle detection units 110 are to be provided on the follower vehicle 12 is the same, a description thereof will be omitted.

The inter-vehicle distance acquisition unit 120 acquires the distance from the leader vehicle that is electronically coupled. The inter-vehicle distance acquisition unit 120 acquires the distance from the leader vehicle to keep the distance constant between the vehicles that are electronically coupled. In FIG. 2, to keep the distance between the leader vehicle 11 and the follower vehicle 12 to d1, the inter-vehicle distance acquisition unit 120 of the follower vehicle 12 acquires the distance between the leader vehicle 11 and the follower vehicle 12. The inter-vehicle distance acquisition unit 120 may also be provided on the rear of the leader vehicle 11, and acquire the inter-vehicle distance from the follower vehicle 12. For example, the inter-vehicle distance acquisition unit 120 may be implemented by a millimeter wave radar.

The inter-vehicle communication unit 130 performs inter-vehicle communication with the other vehicle. The inter-vehicle communication unit 130 performs electronical coupling with the other vehicle by transmitting and receiving speed information, positional information, vehicle information, and the like. Between the vehicles that are electronically coupled, the inter-vehicle communication unit 130 transmits information on whether the vehicle is manually driven or automatically driven, to the other vehicle that is electronically coupled. For example, the inter-vehicle communication unit 130 transmits the information detected by the vehicle detection unit 110 to the other vehicle that is electronically coupled. For example, the inter-vehicle communication unit 130 may be implemented by a data communication module (DCM).

The storage 140 stores therein a control program for controlling the units that form the distance measuring system 100. For example, the storage 140 stores therein vehicle information such as a total length, a vehicle width, and a vehicle height of each of the vehicles that are electronically coupled. For example, the storage 140 stores performance of the vehicle detection unit 110 mounted on each of the vehicles. When the vehicle detection unit 110 is a camera, the performance of the vehicle detection unit 110 is a focal distance, resolution, frequency response characteristics, noise, gradation characteristics, dynamic range, color reproduction, uniformity, geometric distortion, moire, chromatic aberration, blooming, smear, flare, ghost, compressive strain, and the like. The storage 140 stores therein a position of the vehicle detection unit 110 of each of the vehicles in an electronically coupled vehicle group. The storage 140 may also be used for temporarily storing data in the distance measuring system 100, and the like. For example, the storage 140 is a semiconductor memory element such as a random access memory (RAM), a read only memory (ROM), and a flash memory, or a storage device such as a hard disk, a solid state drive, and an optical disc. Moreover, the storage 140 may also be an external storage device wired or wirelessly connected by a communication unit, which is not illustrated.

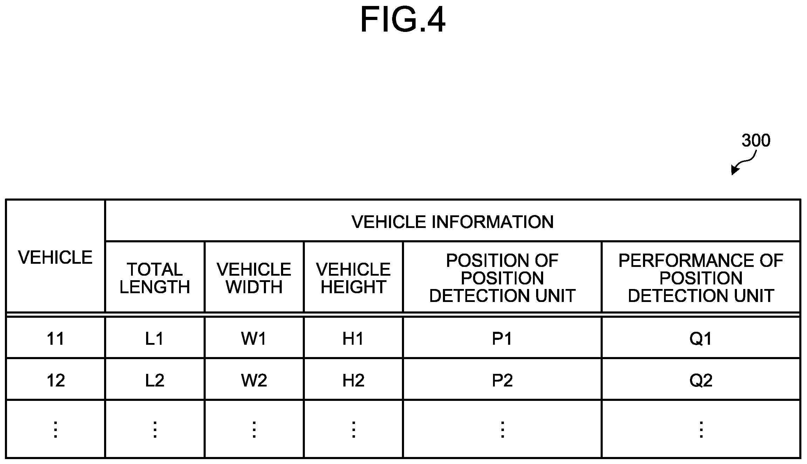

With reference to FIG. 4, an example of the vehicle information of the vehicles stored in the storage 140 will be described. FIG. 4 is a diagram illustrating an example of the vehicle information of the vehicles stored in the storage 140.

Vehicle information 300 illustrated in FIG. 4 includes the vehicle information of the vehicles that are electronically coupled. For example, with regard to the leader vehicle 11, it is indicated that the total length is "L1", the vehicle width is "W1", the vehicle height is "H1", the position of the vehicle detection unit is at "P1", and the performance of the vehicle detection unit is "Q1". Although details will be described below, the controller 150 decides a platoon of the vehicles to be electronically coupled based on the vehicle information.

The controller 150 controls the units that form the distance measuring system 100. More specifically, by deploying and executing the computer program stored in the storage 140, the controller 150 controls the units that form the distance measuring system 100. Based on the position of the preceding vehicle 21 and the position of the following vehicle 22 detected by the vehicle detection unit 110 of the leader vehicle 11, and the position of the preceding vehicle 21 and the position of the following vehicle 22 detected by the follower vehicle 12, the controller 150 calculates the distance between the preceding vehicle 21 and the following vehicle 22. For example, based on the total length of the vehicle coupling system 200 and the distance between the preceding vehicle 21 and the following vehicle 22, the controller 150 determines whether to allow the vehicle coupling system 200 to change lanes. For example, based on the total length of the vehicle coupling system 200 and the distance between the preceding vehicle 21 and the following vehicle 22, the controller 150 adjusts the inter-vehicle distance in the vehicle coupling system 200. For example, based on the positional relationship between the leader vehicle 11, the follower vehicle 12, the preceding vehicle 21, and the following vehicle 22, the controller 150 controls the speed of the vehicle coupling system 200. For example, based on the vehicle information, the controller 150 decides the convoy of the vehicle coupling system 200. The controller 150 decides the convoy of the vehicle coupling system 200 according to the performance of the vehicle detection unit 110. For example, the controller 150 may be implemented by an electronic circuit including a central processing unit (CPU). The controller 150 includes a platoon deciding unit 151, an inter-vehicle distance controller 152, a speed controller 153, a lane change determining unit 154, and a drive controller 155.

The platoon deciding unit 151 decides the convoy of the vehicles to be electronically coupled. More specifically, the platoon deciding unit 151 decides the position of each of the vehicles in the vehicle coupling system 200, and the inter-vehicle distance d1 in the vehicle coupling system 200, based on the vehicle information 300 stored in the storage 140. In this process, based on the vehicle information 300, the platoon deciding unit 151 decides the vehicle width of the vehicle having the greatest vehicle width among the vehicle widths of the vehicles, as the vehicle width of the vehicle coupling system 200. Based on the vehicle information 300, the platoon deciding unit 151 decides the vehicle height of the vehicle having the highest vehicle height among the vehicle heights of the vehicles, as the vehicle height of the vehicle coupling system 200. Based on the vehicle information and the inter-vehicle distance, the platoon deciding unit 151 calculates the total length of the vehicle coupling system 200. For example, in the example illustrated in FIG. 2, the platoon deciding unit 151 calculates a total length D1 of the vehicle coupling system 200 based on the total length of the leader vehicle 11, the total length of the follower vehicle 12, and the inter-vehicle distance d1. The platoon deciding unit 151 calculates the position of the vehicle detection unit 110 of each of the vehicles. It is preferable that the platoon deciding unit 151 places the vehicle including the vehicle detection unit 110 with the highest performance at a top of the platoon, based on the vehicle information 300. When the vehicle detection unit 110 is a camera, it is particularly preferable that the platoon deciding unit 151 decides the platoon based on the focal distance of the camera. For example, when the platoon includes five or more vehicles, and the performances of the vehicle detection units 110 in the four vehicles are the same, the platoon deciding unit 151 may decide the convoy such that a distance in a front-to-rear direction is measured by the four vehicles, by arranging two vehicles out of the four vehicles in the front and the remaining two vehicles in the rear. In other words, when the number of electronically coupled vehicles is increased, the platoon deciding unit 151 may decide the convoy by measuring the distance between the preceding vehicle 21 and the following vehicle 22, by using the vehicle detection units 110 having the similar performance among the vehicles.

The inter-vehicle distance controller 152 controls the inter-vehicle distance in the vehicle coupling system 200. For example, in the example illustrated in FIG. 2, the inter-vehicle distance controller 152 controls the inter-vehicle distance d1 between the leader vehicle 11 and the follower vehicle 12. More specifically, when a person is driving the vehicle, the inter-vehicle distance controller 152 outputs a control signal to a monitor or speaker provided in the vehicle so that an instruction for reducing or increasing the inter-vehicle distance is displayed or verbally delivered to the driver. When the vehicle is driven automatically, the inter-vehicle distance controller 152 outputs a control signal for accelerating or decelerating the vehicle to the vehicle to reduce or increase the inter-vehicle distance. Based on the control signal, the vehicles are controlled to travel at the predetermined inter-vehicle distance. For example, when the vehicle detection unit 110 can accurately detect the vehicles in the adjacent lane by increasing the inter-vehicle distance, the inter-vehicle distance controller 152 increases the inter-vehicle distance d1. For example, when the preceding vehicle 21 is present but the following vehicle 22 is not present, the inter-vehicle distance controller 152 increases the inter-vehicle distance d1. For example, when the following vehicle 22 is present but the preceding vehicle 21 is not present, the inter-vehicle distance controller 152 reduces the inter-vehicle distance d1. For example, when the follower vehicle 12 attempts to detect the position of the preceding vehicle 21, but the position of the preceding vehicle 21 cannot be detected because the leader vehicle 11 is blocking the preceding vehicle 21, the inter-vehicle distance controller 152 increases the inter-vehicle distance d1. For example, when the leader vehicle 11 attempts to detect the position of the following vehicle 22, but the position of the following vehicle 22 cannot be detected because the follower vehicle 12 is blocking the following vehicle 22, the inter-vehicle distance controller 152 increases the inter-vehicle distance d1. For example, when the following vehicle 22 is approaching the follower vehicle 12, and the follower vehicle 12 cannot detect the position of the following vehicle, the inter-vehicle distance controller 152 reduces the inter-vehicle distance d1. For example, the inter-vehicle distance controller 152 controls the inter-vehicle distance d1 based on the total length D1 of the vehicle coupling system 200 and the distance L between the preceding vehicle 21 and the following vehicle 22 that is calculated by the lane change determining unit 154, which will be described below. For example, the inter-vehicle distance d1 between the leader vehicle 11 and the follower vehicle 12 is controlled by the inter-vehicle distance controller 152, by bringing the follower vehicle 12 close to the leader vehicle 11, or separating the follower vehicle 12 from the leader vehicle 11.

The speed controller 153 controls a speed of each of the vehicles. More specifically, when a person is driving the vehicle, the speed controller 153 outputs a control signal to the monitor or speaker provided in the vehicle so that an instruction for reducing or increasing the speed is displayed or verbally delivered to the driver. When the vehicle is driven automatically, the speed controller 153 outputs a control signal for accelerating or decelerating the vehicle to the vehicle, to increase or decrease the speed. Based on the control signal, the vehicle is controlled to travel at a predetermined speed. For example, even though the distance L between the preceding vehicle 21 and the following vehicle 22 is large enough, when the follower vehicle 12 and the following vehicle 22 are close to each other, the speed controller 153 increases the speed of the vehicles. For example, even though the distance L between the preceding vehicle 21 and the following vehicle 22 is large enough, when the leader vehicle 11 and the preceding vehicle 21 are close to each other, the speed controller 153 reduces the speed of the vehicles. In this example, a case in which the vehicles are close corresponds to a case in which the distance between the vehicles is too small to change lanes safely, for example.

The lane change determining unit 154 determines whether the vehicle coupling system 200 can change lanes. More specifically, the lane change determining unit 154 calculates the distance L between the preceding vehicle 21 and the following vehicle 22 based on the position of the preceding vehicle 21 and the position of the following vehicle 22 detected by the leader vehicle 11 and the follower vehicle 12 using a triangulation survey. Based on the total length D1 of the vehicle coupling system 200, and the distance L between the preceding vehicle 21 and the following vehicle 22, the lane change determining unit 154 determines whether the vehicle coupling system 200 can change lanes. When it is determined that the lane change is possible and when a person is driving the vehicle, the lane change determining unit 154 outputs the control signal to the monitor or speaker provided in the vehicle so that the determined state is displayed or verbally delivered to the driver. When it is determined that the lane change is possible by controlling the inter-vehicle distance or controlling the speed and when the person is driving the vehicle, the lane change determining unit 154 outputs the control signal to the monitor or speaker provided in the vehicle so that the determined state is displayed or verbally delivered to the driver. When it is determined that the lane change is possible and when the vehicle is driven automatically, the lane change determining unit 154 outputs the control signal for changing lanes to the drive controller 155. When it is determined that the lane change is possible by controlling the inter-vehicle distance and controlling the speed and when the vehicle is driven automatically, the inter-vehicle distance controller 152 outputs the control signal for controlling the inter-vehicle distance to the vehicle, the speed controller 153 outputs the control signal for controlling the speed to the vehicle, and then the lane change determining unit 154 outputs the control signal for changing lanes to the drive controller 155.

The drive controller 155 drives the vehicle automatically. More specifically, the drive controller 155 controls the drive of the follower vehicle 12 so as to follow the leader vehicle 11. The drive controller 155 causes the vehicles to change lanes according to the control signal from the lane change determining unit 154. For example, the drive controller 155 automatically drives the follower vehicle 12 while the vehicles are traveling, and cancels the automatic driving when the vehicles are parked at a parking lot or the like.

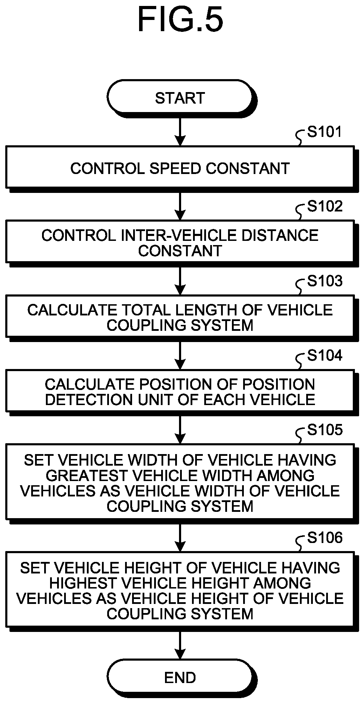

With reference to FIG. 5, an operation to configure the vehicle coupling system 200 according to the present embodiment will be described. FIG. 5 is a flowchart illustrating an example of an operational flow for configuring the vehicle coupling system 200 according to the present embodiment.

The controller 150 controls the speed of the follower vehicle 12 constant in accordance with the speed of the leader vehicle 11 (step S101). The controller 150 then procceeds to step S102.

The controller 150 controls the inter-vehicle distance d1 between the leader vehicle 11 and the follower vehicle 12 constant (step S102). The controller 150 then proceeds to step S103.

Based on the vehicle information 300 and the inter-vehicle distance d1, the controller 150 calculates the total length D1 of the vehicle coupling system 200 (step S103). The controller 150 then proceeds to step S104.

Based on the vehicle information 300 and the total length D1 of the vehicle coupling system 200, the controller 150 calculates the position of the vehicle detection unit 110 of the leader vehicle 11 and the position of the vehicle detection unit 110 of the follower vehicle 12 in the vehicle coupling system 200 (step S104). The controller 150 then proceeds to step S105.

Based on the vehicle information 300, the controller 150 sets the vehicle width of the vehicle having a greater vehicle width among the leader vehicle 11 and the follower vehicle 12, as the vehicle width of the vehicle coupling system 200 (step S105). The controller 150 then proceeds to step S106.

Based on the vehicle information 300, the controller 150 sets the vehicle height of the vehicle having a higher vehicle height among the leader vehicle 11 and the follower vehicle 12, as the vehicle height of the vehicle coupling system 200 (step S106). The controller 150 then finishes the processes illustrated in FIG. 5.

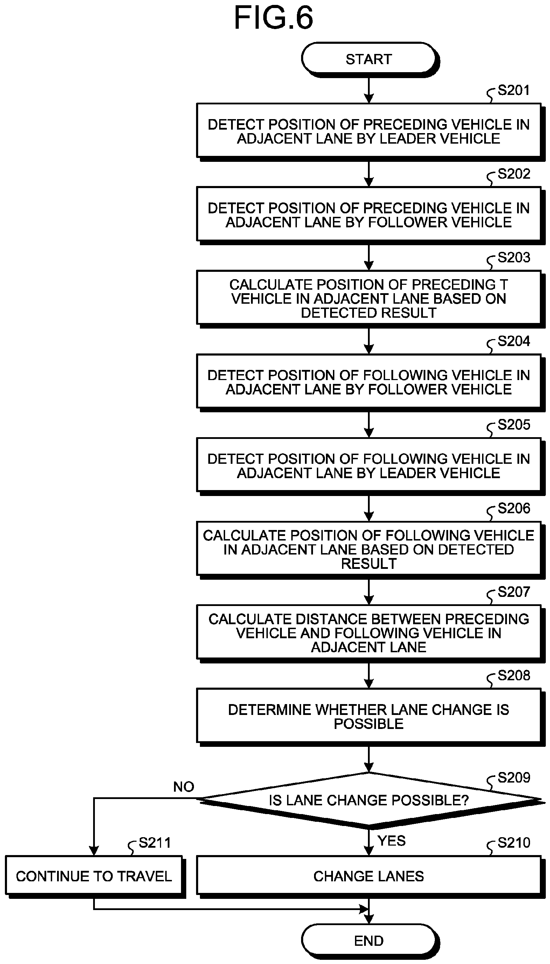

With reference to FIG. 6, an operation performed when the vehicle coupling system 200 intends to change lanes will be described. FIG. 6 is a flowchart illustrating an example of processes performed when the vehicle coupling system 200 intends to change lanes.

First, the vehicle coupling system 200 detects the position of the preceding vehicle 21 in the adjacent lane by the leader vehicle 11 (step S201). More specifically, the vehicle coupling system 200 detects the position of the preceding vehicle 21 by the vehicle detection unit 110 of the leader vehicle 11. The vehicle coupling system 200 then proceeds to step S202.

The vehicle coupling system 200 detects the position of the preceding vehicle 21 in the adjacent lane by the follower vehicle 12 (step S202). More specifically, the vehicle coupling system 200 detects the position of the preceding vehicle 21 by the vehicle detection unit 110 of the follower vehicle 12. For example, the vehicle coupling system 200 calculates the position of the preceding vehicle 21 using a triangulation survey, based on an image captured by the leader vehicle 11 and an image captured by the follower vehicle 12. Consequently, from a viewpoint of accurately calculating the position of the preceding vehicle 21, it is preferable that the distance between the leader vehicle 11 and the follower vehicle 12 is large. The vehicle coupling system 200 then proceeds to step S203.

The vehicle coupling system 200 calculates the position of the preceding vehicle 21, based on the position of the preceding vehicle 21 detected by the leader vehicle 11 and the position of the preceding vehicle 21 detected by the follower vehicle 12 (step S203). More specifically, the vehicle coupling system 200 calculates the position of the preceding vehicle 21 using a triangulation survey, by the controller 150 of either the leader vehicle 11 or the follower vehicle 12. The vehicle coupling system 200 then proceeds to step S204.

The vehicle coupling system 200 detects the position of the following vehicle 22 in the adjacent lane by the follower vehicle 12 (step S204). More specifically, the vehicle coupling system 200 detects the position of the following vehicle 22 by the vehicle detection unit 110 of the following vehicle 22. The vehicle coupling system 200 then proceeds to step S205.

The vehicle coupling system 200 detects the position of the following vehicle 22 in the adjacent lane by the leader vehicle 11 (step S205). More specifically, the vehicle coupling system 200 detects the position of the following vehicle 22 by the vehicle detection unit 110 of the leader vehicle 11. The vehicle coupling system 200 then proceeds to step S206.

The vehicle coupling system 200 calculates the position of the following vehicle 22 based on the position of the following vehicle 22 detected by the leader vehicle 11 and the position of the following vehicle 22 detected by the follower vehicle 12 (step S206). More specifically, the vehicle coupling system 200 calculates the position of the following vehicle 22 using a triangulation survey, by the controller 150 of either the leader vehicle 11 or the follower vehicle 12. The vehicle coupling system 200 then proceeds to step S207.

The vehicle coupling system 200 calculates the distance L between the preceding vehicle 21 and the following vehicle 22 based on the position of the preceding vehicle 21 calculated at step S203 and the position of the following vehicle 22 calculated at step S206 (step S207). More specifically, the vehicle coupling system 200 calculates the distance L between the preceding vehicle 21 and the following vehicle 22 by the controller 150 of either the leader vehicle 11 or the follower vehicle 12. The vehicle coupling system 200 then proceeds to step S208.

The vehicle coupling system 200 determines whether the lane change to the adjacent lane is possible (step S208). More specifically, the vehicle coupling system 200 determines whether the electronically coupled vehicle group can change lanes, based on the total length D1 of the vehicle coupling system 200 and the distance L between the preceding vehicle 21 and the following vehicle 22, by the controller 150 of either the leader vehicle 11 or the follower vehicle 12. The vehicle coupling system 200 then proceeds to step S209.

When it is determined that the lane change is possible (Yes at step S209), the vehicle coupling system 200 proceeds to step S210, and changes lanes (step S210). More specifically, the vehicle coupling system 200 controls the follower vehicle 12 so that the follower vehicle 12 changes lanes by following the leader vehicle 11, by the controller 150 of the follower vehicle 12. The vehicle coupling system 200 may also control the leader vehicle 11 so that the leader vehicle 11 changes lanes depending on the follower vehicle 12, by the controller 150 of the leader vehicle 11. The vehicle coupling system 200 then finishes the processes in FIG. 6.

On the other hand, when it is determined that the lane change is not possible (No at step S209), the vehicle coupling system 200 proceeds to step S211, and continues to travel as it is (step S211). The vehicle coupling system 200 then finishes the processes in FIG. 6.

In FIG. 6, when it is determined that the lane change is not possible, the vehicle coupling system 200 continues to travel as it is. However, when it is determined that the lane change is not possible, the vehicle coupling system 200 may also execute an operation in order to change lanes.

### Second Embodiment

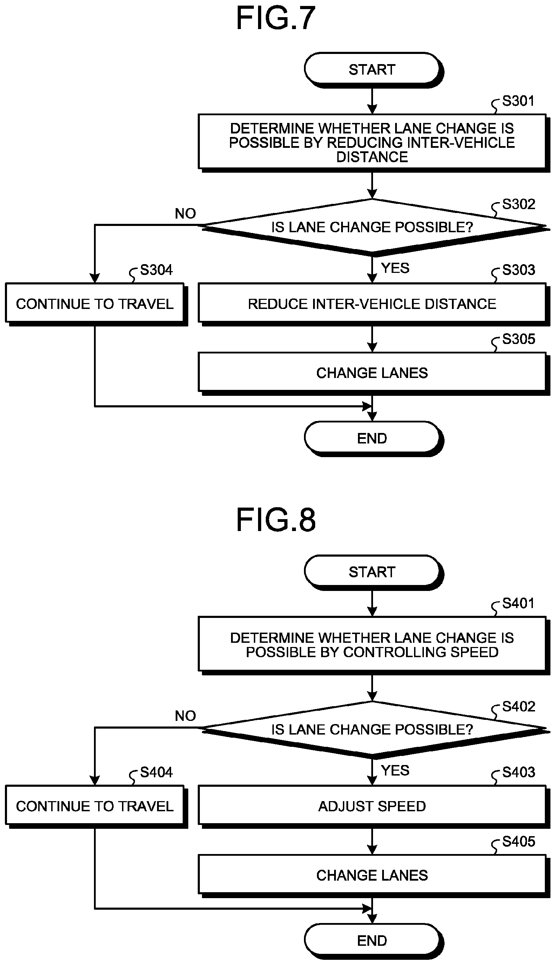

With reference to FIG. 7, an operation of the vehicle coupling system 200 according to a second embodiment will be described. When it is determined that the lane change is not possible, the vehicle coupling system 200 according to the second embodiment controls the inter-vehicle distance to change lanes. FIG. 7 is a flowchart illustrating an operational flow for reducing the inter-vehicle distance when the vehicle coupling system 200 intends to change lanes in a case in which it is determined that the lane change is not possible.

First, the vehicle coupling system 200 determines whether the lane change is possible by reducing the inter-vehicle distance between the leader vehicle 11 and the follower vehicle 12 (step S301). More specifically, the vehicle coupling system 200 determines whether the lane change is possible by reducing the inter-vehicle distance d1, based on the total length D1 of the vehicle coupling system 200, the inter-vehicle distance d1, and the distance L between the preceding vehicle 21 and the following vehicle 22, by the controller 150 of either the leader vehicle 11 or the follower vehicle 12. The vehicle coupling system 200 then proceeds to step S302.

When it is determined that the lane change is possible (Yes at step S302), the vehicle coupling system 200 proceeds to step S303, and reduces the inter-vehicle distance d1 between the leader vehicle 11 and the follower vehicle 12 (step S303). For example, by bringing the follower vehicle 12 close to the leader vehicle 11 by the controller 150 of the follower vehicle 12, the vehicle coupling system 200 reduces the inter-vehicle distance d1. The vehicle coupling system 200 then proceeds to step S305.

On the other hand, when it is determined that the lane change is not possible (No at step S302), the vehicle coupling system 200 proceeds to step S304, and continues to travel as it is (step S304). In this case, the vehicle coupling system 200 finishes the processes in FIG. 7.

The vehicle coupling system 200 changes lanes after reducing the inter-vehicle distance d1 between the leader vehicle 11 and the follower vehicle 12 (step S305). The vehicle coupling system 200 then finishes the processes in FIG. 7.

### Third Embodiment

With reference to FIG. 8, an operation of the vehicle coupling system 200 according to a third embodiment will be described. The vehicle coupling system 200 according to the third embodiment controls a speed of the vehicles to change lanes when it is determined that the lane change is not possible. FIG. 8 is a flowchart illustrating an operational flow for controlling the speed when the vehicle coupling system 200 intends to change lanes in a case in which it is determined that the lane change is not possible.

First, the vehicle coupling system 200 determines whether the lane change is possible by controlling the speed of the leader vehicle 11 and the follower vehicle 12 (step S401). For example, a situation will be considered in which the vehicle coupling system 200 cannot change lanes because, although the distance L between the preceding vehicle 21 and the following vehicle 22 is large enough, the follower vehicle 12 and the following vehicle 22 are close to each other. In this case, the vehicle coupling system 200 determines whether the lane change is possible by increasing the speed by the controller 150 of either the leader vehicle 11 or the follower vehicle 12. For example, a situation will be considered in which the vehicle coupling system 200 cannot change lanes because, although the distance between the preceding vehicle 21 and the following vehicle 22 is large enough, the leader vehicle 11 and the preceding vehicle 21 are close to each other. In this case, the vehicle coupling system 200 determines whether the lane change is possible by reducing the speed by the controller 150 of either the leader vehicle 11 or the follower vehicle 12. The vehicle coupling system 200 then proceeds to step S402.

When it is determined that the lane change is possible (Yes at step S402), the vehicle coupling system 200 proceeds to step S403, and controls the speed of the leader vehicle 11 and the follower vehicle 12 (step S403). For example, the vehicle coupling system 200 adjusts the speed by the controller 150 of either the leader vehicle 11 or the follower vehicle 12. The vehicle coupling system 200 then proceeds to step S405.

On the other hand, when it is determined that the lane change is not possible (No at step S402), the vehicle coupling system 200 proceeds to step S404, and continues to travel as it is (step S404). In this case, the vehicle coupling system 200 finishes the processes in FIG. 8.

After adjusting the speed of the leader vehicle 11 and the follower vehicle 12, the vehicle coupling system 200 changes lanes (step S405). The vehicle coupling system 200 then finishes the processes in FIG. 8.

In the above, it is explained that two vehicles are electronically coupled. However, this explanation is merely an example, and the present invention is not limited thereto. In the present invention, three or more vehicles may also be electronically coupled.

### Fourth Embodiment

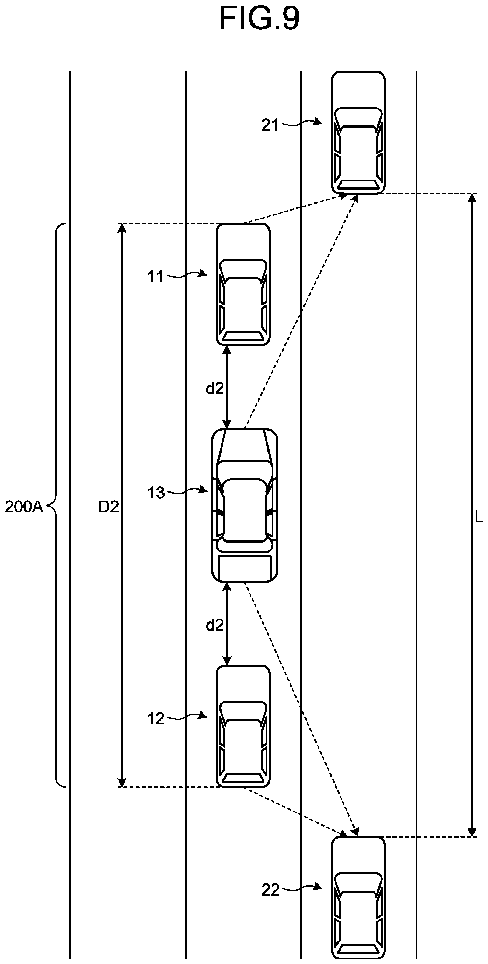

With reference to FIG. 9, a method for measuring the inter-vehicle distance by a vehicle coupling system 200A according to a fourth embodiment will be described. The vehicle coupling system 200A according to the fourth embodiment measures the inter-vehicle distance by electronically coupling three vehicles. FIG. 9 is a diagram for explaining a method for measuring the inter-vehicle distance when three vehicles are electronically coupled. Because the specific processes of the distance measuring system 100 is the same as the processes performed when the two vehicles are electronically coupled, the detailed description thereof will be omitted.

In FIG. 9, the leader vehicle 11, the follower vehicle 12, and an intermediate follower vehicle 13 are electronically coupled to configure the vehicle coupling system 200A. In this case, the distance measuring system 100 is mounted on each of the leader vehicle 11, the follower vehicle 12, and the intermediate follower vehicle 13.

In the vehicle coupling system 200A, the intermediate follower vehicle 13 travels so as to follow the leader vehicle 11 while keeping an inter-vehicle distance d2 from the leader vehicle 11. The follower vehicle 12 travels so as to follow the intermediate follower vehicle 13 while keeping the inter-vehicle distance d2 from the intermediate follower vehicle 13. Consequently, a total length D2 of the vehicle coupling system 200A is maintained.

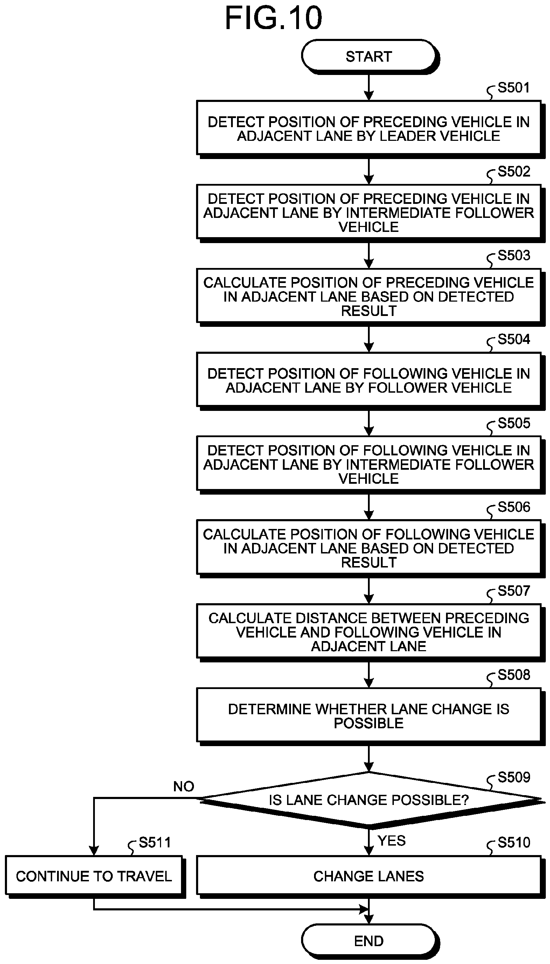

With reference to FIG. 10, processes performed when the vehicle coupling system 200A intends to change lanes will be described. FIG. 10 is a flowchart illustrating an example of processes performed when the vehicle coupling system 200A intends to change lanes.

The vehicle coupling system 200A detects the position of the preceding vehicle 21 in the adjacent lane by the leader vehicle 11 (step S501). The vehicle coupling system 200A then proceeds to step S502.

The vehicle coupling system 200A detects the position of the preceding vehicle 21 in the adjacent lane by the intermediate follower vehicle 13 (step S502). The vehicle coupling system 200A then proceeds to step S503.

Based on the position of the preceding vehicle 21 detected by the leader vehicle 11 and the position of the preceding vehicle 21 detected by the intermediate follower vehicle 13, the vehicle coupling system 200A calculates the position of the preceding vehicle 21 (step S503). The vehicle coupling system 200A then proceeds to step S504.

The vehicle coupling system 200A detects the position of the following vehicle 22 in the adjacent lane by the follower vehicle 12 (step S504). The vehicle coupling system 200A then proceeds to step S505.

The vehicle coupling system 200A detects the position of the following vehicle 22 in the adjacent lane by the intermediate follower vehicle 13 (step S505). The vehicle coupling system 200A then proceeds to step S506.

The vehicle coupling system 200A calculates the position of the following vehicle 22 based on the position of the following vehicle 22 detected by the follower vehicle 12 and the position of the following vehicle 22 detected by the intermediate follower vehicle 13 (step S506). The vehicle coupling system 200A then proceeds to step S507.

The vehicle coupling system 200A calculates the distance L between the preceding vehicle 21 and the following vehicle 22 based on the position of the preceding vehicle 21 calculated at step S503 and the position of the following vehicle 22 calculated at step S506 (step S507).

The vehicle coupling system 200A determines whether the lane change to the adjacent lane is possible (step S508).

When it is determined that the lane change is possible (Yes at step S509), the vehicle coupling system 200 proceeds to step S510 and changes lanes (step S510).

On the other hand, when it is determined that the lane change is not possible (No at step S509), the vehicle coupling system 200A proceeds to step S511, and continues to travel as it is (step S511). The vehicle coupling system 200A then finishes the processes in FIG. 10.

When the vehicle widths of the leader vehicle 11, the follower vehicle 12, and the intermediate follower vehicle 13 are different from one another, it is preferable to electronically couple the leader vehicle 11, the follower vehicle 12, and the intermediate follower vehicle 13 such that the vehicle width of the intermediate follower vehicle 13 is the greatest. When the performances of the vehicle detection units 110 in the leader vehicle 11, the follower vehicle 12, and the intermediate follower vehicle 13 are different from one another, the platoon may be changed so that the distance L between the preceding vehicle 21 and the following vehicle 22 can be measured accurately according to the performance.

As described above, in the embodiments, the inter-vehicle distance can be measured by accurately calculating the positions (coordinates) of the preceding vehicle and the following vehicle in the adjacent lane, using a triangulation survey, based on the captured images of the cameras on the two vehicles that are spaced apart. Alternatively, when the inter-vehicle distance is measured by one vehicle, it is sometimes difficult to measure the inter-vehicle distance accurately. To accurately measure the inter-vehicle distance by one vehicle, a highly accurate and expensive device will be needed.

As described above, in the embodiments, the distance measuring system is mounted on each of the vehicles that form the vehicle coupling system. Consequently, it is possible to measure the distance between the preceding vehicle and the following vehicle that are traveling in the adjacent lane, and appropriately execute the control to change lanes according to the measured distance. Consequently, it is possible to electronically couple multiple private cars, and allow the coupled vehicles to travel appropriately.

Moreover, in the embodiments, the platoon of the multiple vehicles that form the vehicle coupling system is decided based on the vehicle information and the like of the multiple vehicles. Consequently, in the embodiments, even when the vehicle coupling system is formed by the vehicles with the different total lengths, the vehicle widths, and the vehicle heights, it is possible to allow the vehicle coupling system to travel to a destination appropriately without selecting a road through which a certain vehicle is unable to travel, for example.

Furthermore, in the embodiments, it is possible to drive accurately by electronically coupling the vehicles while placing the vehicle including a camera with the most excellent performance at the top.

Still furthermore, in the embodiments, it is possible to appropriately drive the vehicles that are electronically coupled, and accurately measure the distance. Consequently, for example, when the multiple vehicles are traveling together to the same destination as a group, an error of arrival time of each of the vehicles does not occur, and there is no need to wait for other vehicles to arrive. Still furthermore, in the embodiments, when the vehicles are electronically coupled and traveling normally, there is no need to drive at least the follower vehicle. Consequently, the driver of the first vehicle and the driver of the other vehicles can take turns driving, and thus the driver can take a rest and drive safely.

### Reference Signs List

- 11: leader vehicle
- 12: follower vehicle
- 13: intermediate follower vehicle
- 21: preceding vehicle
- 22: following vehicle
- 100: distance measuring system
- 110: vehicle detection unit
- 120: inter-vehicle distance acquisition unit
- 130: inter-vehicle communication unit
- 140: storage
- 150: controller
- 151: platoon deciding unit
- 152: inter-vehicle distance controller
- 153: speed controller
- 154: lane change determining unit
- 155: drive controller
- 200, 200A: vehicle coupling system
- 300: vehicle information

## Claims

1. A distance measuring system in an electronically coupled vehicle group in which multiple vehicles are electronically coupled, each of the multiple vehicles comprising:
a vehicle detection unit configured to detect, in an adjacent lane adjacent to a lane where the electronically coupled vehicle group is travelling, a first position of a preceding vehicle traveling in front of the electronically coupled vehicle group and a first position of a following vehicle traveling behinf the electronically coupled vehicle group;
an inter-vehicle communication unit configured to receive a second position of the preceding vehicle and a second position of the following vehicle detected by another vehicle among the multiple vehicles of the electronically coupled vehicle group; and
a controller configured to calculate a distance between the preceding vehicle and the following vehicle based on the detected first position of the preceding vehicle, the detected first position of the following vehicle, the received second position of the preceding vehicle, and the received second position of the following vehicle.

2. A vehicle coupling system comprising:
the multiple vehicles that include the distance measuring system according to claim 1.

3. The vehicle coupling system according to claim 2, wherein the controller is further configured to determine whether to allow the electronically coupled vehicle group to change lanes based on a total length of the electronically coupled vehicle group and the distance between the preceding vehicle and the following vehicle.

4. The vehicle coupling system according to claim 2 or 3, wherein the controller is further configured to adjust an inter-vehicle distance in the electronically coupled vehicle group based on a total length of the electronically coupled vehicle group, and the distance between the preceding vehicle and the following vehicle.

5. The vehicle coupling system according to any one of claims 2 to 4, wherein the controller is further configured to control a speed of the electronically coupled vehicle group based on a positional relationship between a leader vehicle in the electronically coupled vehicle group, a follower vehicle in the electronically coupled vehicle group, the preceding vehicle in the adjacent lane, and the following vehicle in the adjacent lane.

6. The vehicle coupling system according to any one of claims 2 to 5, wherein the controller is further configured to decide a platoon of the electronically coupled vehicle group based on vehicle information.

7. The vehicle coupling system according to any one of claims 2 to 6, wherein the controller is further configured to decide a platoon of the electronically coupled vehicle group according to performance of the vehicle detection unit provided in each of the multiple vehicles in the electronically coupled vehicle group.

8. A distance measuring method in an electronically coupled vehicle group in which multiple vehicles are electronically coupled, comprising in each of the multiple vehicles:
a step of detecting, in an adjacent lane adjacent to a lane where the electronically coupled vehicle group is travelling, a first position of a preceding vehicle traveling in front of the electronically coupled vehicle group and a first position of a following vehicle traveling behind the electronically coupled vehicle group;
a step of receiving, by an inter-vehicle communication, a second position of the preceding vehicle and a second position of the following vehicle detected by another vehicle among the multiple vehicles of the electronically coupled vehicle group; and
a step of calculating a distance between the preceding vehicle and the following vehicle based on the detected first position of the preceding vehicle, the detected first position of the following vehicle, the received second position of the preceding vehicle, and the received second position of the following vehicle.

9. A computer program that causes a computer operating as a distance measuring system in an electronically coupled vehicle group in which multiple vehicles are electronically coupled, to execute a distance measuring method comprising in each of the multiple vehicles:
a step of detecting, in an adjacent lane adjacent to a lane where the electronically coupled vehicle group is travelling, a first position of a preceding vehicle traveling in front of the electronically coupled vehicle group and a first position of a following vehicle traveling behind the electronically coupled vehicle group;
a step of receiving, by an inter-vehicle communication, a second position of the preceding vehicle and a second position of the following vehicle detected by another vehicle among the multiple vehicles of the electronically coupled vehicle group; and
a step of calculating a distance between the preceding vehicle and the following vehicle based on the detected first position of the preceding vehicle, the detected first position of the following vehicle, the received second position of the preceding vehicle, and the received second position of the following vehicle.
